# EUROPEAN PATENT APPLICATION

(11) **EP 4 617 129 A1**
(43) Date of publication of application: **17.09.2025**
(21) Application number: 24163035.9
(22) Date of filing: 12.03.2024
(51) Int. Cl.: B60W 30/02

(54) **HANDLING A TIRE PRESSURE HAZARD**

(71) Applicant: VOLVO TRUCK CORPORATION, 405 08 Göteborg (SE)
(72) Inventor: QUIBRIAC, Yann, 69007 Lyon (FR); RIBERO, Raphael, 69390 Millery (FR)
(74) Representative: Valea AB

(57) **Abstract**

A computer system (1000) comprising processing circuitry (1002) configured to handle a motion of a vehicle (1) is provided. The processing circuitry is configured to detect a tire pressure hazard of a first wheel (11) of a plurality of wheels (10) of the vehicle (1). The processing circuitry is configured to obtain an indication of a trajectory (t) of the vehicle (1). The processing circuitry is configured to adapt respective torques applied to the plurality of wheels (10) by using motion support devices (20) to reduce or remove torque applied to the first wheel (11) and, to adapt torque for the remaining plurality of wheels (10) of the vehicle (1). The torque for the remaining plurality of wheels (10) is adapted based on the trajectory (t) and adapted by accounting for the reduced or removed torque of the first wheel (11).

## Description

### TECHNICAL FIELD

The disclosure relates generally to handling a tire pressure hazard. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

In case of a tire pressure hazard of a wheel in a vehicle, such as a tire explosion or other rapid drop in tire pressure of a tire, a trajectory of the vehicle can significantly be changed, forcing a driver to try to oversteer to maintain a safe trajectory of the vehicle.

Furthermore, when the vehicle is configured in a Cruise Control (CC) mode or in an Adaptive Cruise Control (ACC), the vehicle may keep a target speed, or may change the target speed during the tire pressure hazard which further makes it increasingly difficult to handle the vehicle.

Hence, there is a strive to improve handling of tire pressure hazard in a vehicle.

### SUMMARY

According to a first aspect of the disclosure, a computer system comprising processing circuitry configured to handle a vehicle motion of a vehicle comprising plurality of wheels. The plurality of wheels comprises motion support devices for controlling a respective motion of the respective wheel. The processing circuitry being configured to detect a tire pressure hazard, of a first wheel of the plurality of wheels. The processing circuitry being configured to obtain an indication of a trajectory of the vehicle. The processing circuitry being configured to adapt respective torques applied to the plurality of wheels by using the motion support devices to reduce or remove torque applied to the first wheel and, to adapt torque for the remaining plurality of wheels of the vehicle. The torque for the remaining plurality of wheels is adapted based on the trajectory and adapted by accounting for the reduced or removed torque of the first wheel.

The first aspect of the disclosure may seek to improve handling of tire pressure hazard in the vehicle. A technical benefit may include improved handling of the vehicle during the tire pressure hazard. In particular, the vehicle can maintain a safe trajectory during the tire pressure hazard. This is since motion support devices to reduce or remove torque applied to the first wheel which ensures that the first wheel does not propel the vehicle in an excessive turning motion and/or does not excessively spin which could affect the trajectory of the vehicle in an unpredictable manner. Furthermore, since the torque for the remaining plurality of wheels is adapted based on the trajectory and adapted by accounting for the reduced or removed torque of the first wheel, the vehicle can maintain a safe trajectory despite the tire pressure hazard.

Optionally in some examples, including in at least one preferred example, the processing circuitry is further configured to adapt the respective torques applied to the plurality of wheels by determining and applying respective torque for each of the plurality of wheels. In these examples, the torques for the plurality of wheels are determined such that a resulting vehicle motion of the vehicle maintains the trajectory of the vehicle within an error margin of the trajectory.

A technical benefit may include improved handling of tire pressure hazard in the vehicle. This is since the trajectory of the vehicle can be maintained within a small error margin. This may further mean that a driver will have more time to consider how to manage the vehicle in response to the tire pressure hazard and may have time to make a controlled stop where deemed suitable.

Optionally in some examples, including in at least one preferred example, the processing circuitry is further configured to adapt the respective torques applied to the plurality of wheels by determining and applying respective torque for the plurality of wheels. In these examples, the torques for the plurality of wheels are determined such that a resulting vehicle motion of the vehicle meets one or more speed criteria.

A technical benefit may include improved handling of tire pressure hazard in the vehicle. This is since the speed of the vehicle can be set to meet the speed criteria, typically slowing down in a predetermined manner and/or based on the environment of the vehicle. This may improve the control of the vehicle and may also ensure that the vehicle maintains a safe speed. The safe speed may include not slowing down too much e.g., to avoid rear collisions.

Optionally in some examples, including in at least one preferred example, when the trajectory is indicative of that the vehicle is not turning by more than a turning threshold, the processing circuitry is configured to adapt the respective torques applied to the plurality of wheels by reducing or removing torque to wheels belonging to the same axle as the first wheel.

A technical benefit may include improved handling of tire pressure hazard in the vehicle. This is since when the vehicle is not turning, it may be sufficient to remove or reduce the torque provided to wheels belonging to the same axle as the first wheel.

Optionally in some examples, including in at least one preferred example, when the trajectory is indicative of that the vehicle is turning by more than a turning threshold, the processing circuitry is configured to adapt the respective torques applied to the plurality of wheels by reducing torque on the first wheel, and to adapt the torque of the remaining plurality of wheels based on a predefined torque vectoring model, such that the adapted torque of the plurality of wheels maintains the turning trajectory of the vehicle within an error margin of the turning trajectory.

A technical benefit may include improved handling of tire pressure hazard in the vehicle. This is since the use of the predefined torque vectoring model may ensure that the vehicle maintains the turning trajectory of, at least within the error margin.

Optionally in some examples, including in at least one preferred example, when the first wheel is attached to a steered axle of the vehicle. In these examples, the steered axle further is attached to a second wheel of the plurality of wheels, the processing circuitry is configured to adapt the respective torques applied to the plurality of wheels by reducing torque applied to the first wheel and by adapting a torque applied to the second wheel such that a motion of the second wheel is adapted to correspond to a motion of the first wheel.

A technical benefit may include improved handling of tire pressure hazard in the vehicle. This is since the motion of the first wheel and/or corresponding effect on a resulting trajectory of the vehicle can be matched by the second wheel such that the resulting effect on the trajectory of the vehicle can be minimized.

Optionally in some examples, including in at least one preferred example, the vehicle is configured to travel using ACC or CC. In some of these examples, the processing circuitry is configured to, in response to detecting the tire pressure hazard of the first wheel, reconfigure the vehicle to a manual control mode or to a predefined tire pressure hazard control mode arranged for an automatic controlled stop of the vehicle.

A technical benefit may include improved handling of tire pressure hazard in the vehicle. This is since a driver can quickly take over, including speed and acceleration control which ensures that the vehicle does not continue to recklessly speed or accelerate. Alternatively, the vehicle may use the predefined tire pressure hazard control mode such that the vehicle automatically can perform a controlled stop.

Optionally in some examples, including in at least one preferred example, the processing circuitry is configured to detect the tire pressure hazard in the first wheel by detecting a pressure drop, flat tire or tire explosion of the first wheel.

A technical benefit may include improved handling of tire pressure hazard in the vehicle. This is since the tire pressure hazard can be handled independently of the hazard.

Optionally in some examples, including in at least one preferred example, the processing circuitry is further configured to, in addition to detecting a tire pressure hazard of the first wheel detect a tire pressure hazard of a third wheel of the plurality of wheels, and adapt respective torques applied to the plurality of wheels by, in addition to reducing or removing torque applied to the first wheel, reducing or removing torque applied to the third wheel and adapting torque for the remaining plurality of wheels of the vehicle. In these examples, the torque for the remaining plurality of wheels is adapted based on the trajectory and adapted by accounting for the reduced or removed torque of the first wheel and accounting for the reduced or removed torque of the third wheel.

According to a second aspect of the disclosure, a vehicle comprising plurality of wheels is provided. The vehicle comprises and/or is controlled by the computer system according to the first aspect.

The second aspect of the disclosure may seek to improve handling of tire pressure hazard in the vehicle. A technical benefit may include improved handling of the vehicle during the tire pressure hazard.

Optionally in some examples, including in at least one preferred example, the vehicle is a vehicle combination comprising a tractor and a trailer. In these examples, the plurality of wheels comprises plurality of wheels of the tractor and plurality of wheels of the trailer.

A technical benefit may include improved handling of tire pressure hazard in the vehicle. This is since the tire pressure hazard can be handled for both the trailer and the tractor, and associated adaptation of torque can also consider the trajectory of the entire vehicle combination, including trajectory of the tractor and trajectory of the trailer.

According to a third aspect of the disclosure, a computer-implemented method for handling a vehicle motion of a vehicle comprising plurality of wheels is provided. The plurality of wheels comprising motion support devices for controlling a respective motion of the respective wheel. The method comprises, by processing circuitry of a computer system, detecting a tire pressure hazard of a first wheel of the plurality of wheels. The method comprises, by the processing circuitry, obtaining an indication of a trajectory of the vehicle. The method comprises, by the processing circuitry and by using the motion support devices, adapting respective torques applied to the plurality of wheels by:
- reducing or removing torque applied to the first wheel and,
- adapting torque for the remaining plurality of wheels of the vehicle, the torque for the remaining plurality of wheels being adapted based on the trajectory and adapted by accounting for the reduced or removed torque of the first wheel.

The third aspect of the disclosure may seek to improve handling of tire pressure hazard in the vehicle. A technical benefit may include improved handling of the vehicle during the tire pressure hazard.

Optionally in some examples, including in at least one preferred example, adapting respective torques applied to the plurality of wheels comprises determining and applying respective torque for each of the plurality of wheels. In these examples, the torques for the plurality of wheels are determined such that a resulting vehicle motion of the vehicle maintains the trajectory of the vehicle within an error margin of the trajectory.

Optionally in some examples, including in at least one preferred example, adapting respective torques applied to the plurality of wheels comprises determining and applying respective torque for the plurality of wheels. In these examples, the torques for the plurality of wheels are determined such that a resulting vehicle motion of the vehicle meets one or more speed criteria.

Optionally in some examples, including in at least one preferred example, when the trajectory is indicative of that the vehicle is turning by more than a turning threshold, adapting respective torques applied to the plurality of wheels comprises reducing torque on the first wheel, and adapting the torque of the remaining plurality of wheels based on a predefined torque vectoring model, such that the adapted torque of the plurality of wheels maintains the turning trajectory of the vehicle within an error margin of the trajectory.

Optionally in some examples, including in at least one preferred example, when the first wheel is attached to a steered axle of the vehicle. and wherein the steered axle further is attached to a second wheel of the plurality of wheels, adapting respective torques applied to the plurality of wheels comprises:
- reducing torque applied to the first wheel and
- adapting a torque applied to the second wheel such that a motion of the second wheel is adapted to correspond to a motion of the first wheel.

Optionally in some examples, including in at least one preferred example, the vehicle is configured to travel using ACC or CC. In these examples, the method further comprises, in response to detecting the tire pressure hazard of the first wheel, reconfiguring the vehicle to a manual control mode or to a predefined tire pressure hazard control mode arranged for an automatic controlled stop of the vehicle.

Optionally in some examples, including in at least one preferred example, detecting the tire pressure hazard of the first wheel, further comprises detecting a tire pressure hazard of a third wheel of the plurality of wheels, and adapting respective torques applied to the plurality of wheels by:
- in addition to reducing or removing torque applied to the first wheel, reducing or removing torque applied to the third wheel and,
- adapting torque for the remaining plurality of wheels of the vehicle, the torque for the remaining plurality of wheels being adapted based on the trajectory and adapted by accounting for the reduced or removed torque of the first wheel and accounting for the reduced or removed torque of the third wheel.

Technical benefits of the third aspect of the disclosure may correspond to the technical benefits of the first aspect of the disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary diagram of a vehicle according to an example.
**FIG. 2** is a flow chart of a method according to an example.
**FIG. 3** is an exemplary block diagram according to an example.
**FIG. 4** is a flow chart of ACC management according to an example.
**FIG. 5** is a flow chart of Torque vectoring management according to an example.
**FIG. 6** is an example scenario according to an example.
**FIG. 7** is an example scenario according to an example.
**FIG. 8** is a flow chart of a method according to an example.
**FIG. 9** is another view of **FIG. 1****,** according to an example.
**FIG. 10** is a flow chart of a method to according to an example.

### DETAILED DESCRIPTION

The detailed description set forth below provides information and examples of the disclosed technology with sufficient detail to enable those skilled in the art to practice the disclosure.

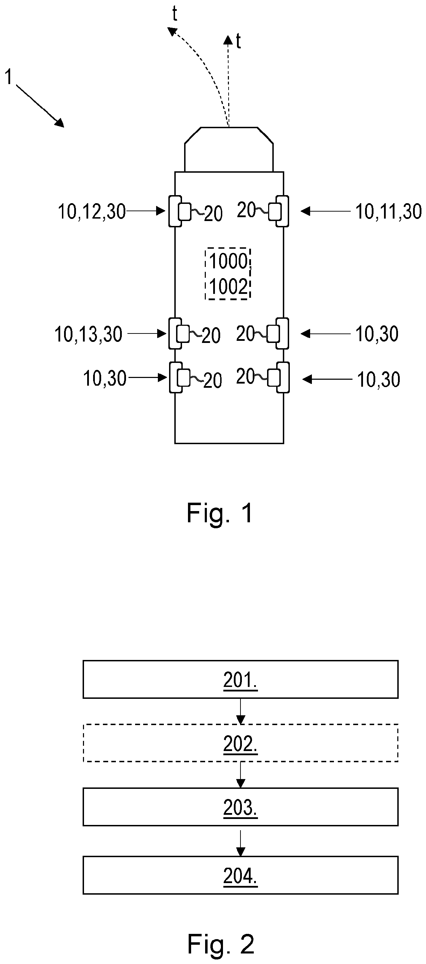

**FIG. 1** is an exemplary diagram of a **vehicle 1** according to an example.

In FIG. 1, the vehicle 1 is illustrated as a truck, however, the vehicle 1 may be any suitable vehicle, e.g., bus, truck, car, vehicle combination comprising a tractor and a trailer, or any other heavy-duty vehicle.

The vehicle 1 may typically be a Battery Electric Vehicle (BEV) or any other suitable electric vehicle. Examples herein are however not limited to electric vehicles.

The vehicle 1 comprises a **plurality of wheels 10.** When the vehicle 1 comprises a tractor and a trailer, the plurality of wheels 10 may comprise wheels of any or both of the tractor and the trailer.

In examples herein, the vehicle 1 may be arranged to travel according to a **trajectory t.** The trajectory t may be a turning trajectory or a trajectory following a road, e.g., going straight.

The plurality of wheels 10 comprises **motion support devices 20** for controlling a respective motion of the respective wheel. Typically, each wheel comprises a respective motion support device 20 for controlling the respective motion of the respective wheel, e.g., braking/retardation or propulsion. A respective motion support device may typically only control a single wheel, but other arrangements, e.g., that at least some motion support devices control a respective axle, may also be possible.

The respective motion support devices 20 may comprise an electrical motor and/or an electrical retarder for controlling torque applied to the respective wheel. Typically, there is one motor and/or retarder per wheel, but other configurations may also apply, e.g., multiple motors or retarders per wheel.

Typically in examples herein, the motion support devices 20 may control a torque applied to a respective electric motor of each respective wheel.

The torque for each respective wheel may be controlled by providing a Pulse-Width Modulation (PWM) current to the respective motion support device.

In some examples herein it is therefore possible to adjust, in a very precise manner, a current provided to the respective electric motors of the motion support devices 20 which results in a very precise control of the torque applied to each wheel. The torque applied on each respective wheel may be positive or negative resulting in an acceleration or deceleration effect on the respective wheel. In normal driving situations, the torque applied on each wheel is relatively equal, e.g., all torques are within a set interval, to ensure a straight and forward trajectory of the vehicle 1. In the case of curves, the torque of the plurality of wheels 10 may need to be modified to take into account the difference of distance between the curves interior wheels vs curves exterior wheels. As will be discussed in examples herein, in case of a sudden tire pressure failure in any one or more out of the plurality of wheels 10, it is possible to adjust the torque of the wheel with a failing tire independently of the others in order to avoid wheel spinning. The torque of other wheels may be adapted to accommodate for the loss of torque provided to the wheel with the failing tire by torque vectoring to maintain the trajectory t.

In some examples herein, the vehicle 1 may be arranged in a CC mode or in an ACC mode. If the vehicle 1 is travelling using CC the vehicle 1 may be arranged to maintain a set speed. If the vehicle 1 is travelling using ACC the vehicle 1 may be arranged to maintain a speed of another target vehicle or to travel at a speed set by any other suitable condition.

In examples herein, the vehicle 1 may be arranged to detect a tire pressure hazard, e.g., a tire explosion, of **a first wheel 11** of the plurality of wheels 10. The first wheel 11 may be part of a steered axle as depicted in FIG. 1, but the first wheel 11 may also be part of a non-steered axle. In examples herein, the torque of the first wheel 11 may be reduced or removed. The remaining wheels of the plurality of wheels 10 may be adapted such that the torques of the remaining wheels are adapted such that the trajectory t is maintained within an error margin.

The plurality of wheels 10 may further comprise a second wheel 12 of the same axle as the first wheel 11. In some examples herein, a motion of the second wheel 12 may be adapted to match a corresponding motion of the first wheel 11.

The plurality of wheels 10 may further comprise a third wheel 13 of any suitable axle of the vehicle 1. In some examples herein, detecting the tire pressure hazard may further comprise detecting a tire pressure hazard of the third wheel 13 and in these examples, torques of the plurality of the wheels 10 are adapted to account for the tire pressure hazard of both the first wheel 11 and the third wheel 13.

The vehicle 1 may comprise **one or more tire pressure sensors 30,** coupled with tires of the plurality of wheels 10.

Examples herein may be performed by a **computer system 1000** and/or a **processing circuitry 1002** therein.

The computer system 1000 and/or the processing circuitry 1002 therein may be comprised in the vehicle 1 or may be remote to the vehicle 1, e.g., as part of a server or cloud service.

The computer system 1000 and/or the processing circuitry 1002 therein may be communicatively coupled with any suitable entity of the vehicle 1, such that the computer system 1000 and/or the processing circuitry 1002 therein may control any suitable entity of the vehicle 1, and/or obtain any data or measurements of entities of the vehicle 1.

The computer system 1000 and/or the processing circuitry 1002 therein may be an Electronic Control Unit (ECU).

**FIG. 2** is a flow chart of a computer-implemented method for handling a motion of the vehicle 1 according to an example. The vehicle 1 comprises the plurality of wheels 10. The plurality of wheels 10 comprises the motion support devices 20 for controlling a respective motion of the respective wheel. The method comprises the following actions which may be taken in any suitable order. Dashed boxes in FIG. 2 may indicate optional actions. The computer system 1000 and/or the processing circuitry 1002 therein may be configured to perform any one or more out of the following actions in any suitable order.

### Action 201

The method comprises detecting a tire pressure hazard of the first wheel 11 of the plurality of wheels 10.

Detecting the tire pressure hazard in the first wheel 11 may comprise detecting a pressure drop, e.g., a pressure drop with a pressure drop higher than a threshold, detecting a flat tire or detecting a tire explosion of the first wheel 11.

Detecting the tire pressure hazard in the first wheel 11 may be performed by use the one or more tire pressure sensors 30 comprised in the vehicle 1.

Detecting the tire pressure hazard and/or pressure drop may comprise detecting the pressure drop or the tire pressure hazard by receiving information of said pressure drop, e.g., from pressure sensors of the first wheel 11.

The method may further comprise detecting a tire pressure hazard of a third wheel 13 of the plurality of wheels 10, e.g., as part of or simultaneously or concurrently to Action 201.

Detecting the tire pressure hazard in the third wheel 13 may comprise detecting a pressure drop, e.g., a pressure drop with a pressure drop higher than a threshold, detecting a flat tire or detecting a tire explosion of the third wheel 13.

Detecting the tire pressure hazard in the third wheel 13 may be performed by use the one or more tire pressure sensors 30 comprised in the vehicle 1.

Detecting the tire pressure hazard in the third wheel 13 may comprise receiving information of pressure in the third wheel 13, e.g., from pressure sensors of the third wheel 13.

### Action 202

As discusses above, in some examples, the vehicle 1 is configured to travel using ACC or CC. In these examples, the method may comprise, in response to detecting the tire pressure hazard of the first wheel 11 or the third wheel 13, e.g., as in action 201, reconfiguring the vehicle 1 to a manual control mode or to a predefined tire pressure hazard control mode arranged for an automatic controlled stop of the vehicle 1.

In other words, a driver of the vehicle 1 may automatically get control of speed regulations of the vehicle 1 in response to detecting the tire pressure hazard of the first wheel 11 or the third wheel 13. Alternatively, the vehicle 1 may automatically use the predefined tire pressure hazard control mode arranged for an automatic controlled stop of the vehicle 1. The predefined tire pressure hazard control mode may relate to any suitable mode for stopping the vehicle, possibly stopping on the side of a road by gradually decreasing a speed of the vehicle 1.

### Action 203

The method comprises obtaining an indication of the trajectory t of the vehicle 1. The trajectory t may indicate how the vehicle is turning, by how much, or if the vehicle 1 is travelling straight. I.e., the trajectory t may be a turning trajectory.

The trajectory t may be measured or obtained by the one or more sensors comprised in the vehicle, e.g., by use of video of a road the vehicle 1 is travelling on and/or based on a measured steering wheel angle of the vehicle 1.

The trajectory t may further be obtained based on measurements from Electronic Stability Control Program Sensors, i.e., wheel speed sensors.

### Action 204

The method comprises, adapting respective torques applied to the plurality of wheels 10 by reducing or removing torque applied to the first wheel 11 and, adapting torque for the remaining plurality of wheels 10 of the vehicle 1.

Reducing or removing torque applied to the first wheel 11 and adapting torque for the remaining plurality of wheels 10 of the vehicle 1 is adapted by using the motion support devices 20.

In other words, in example herein, reducing or removing torque applied to the first wheel 11 and/or adapting torque for the remaining plurality of wheels 10 of the vehicle 1 may comprise sending instructions to the relevant or applicable motion support devices 20 to adapt, remove, or reduce torque accordingly.

The torque for the remaining plurality of wheels 10 is adapted based on the trajectory t and adapted by accounting for the reduced or removed torque of the first wheel 11.

Adapting torque for the remaining plurality of wheels 10 of the vehicle 1 typically comprises adapting torque for all of the plurality of wheels 10 excluding wheels with tire pressure hazards, e.g., the first wheel 10 and in some examples the third wheel 13. However, in some examples, not all wheels out of the plurality of wheels 10 needs to be adapted, e.g., as it is possible to maintain the trajectory t by only adapting torque of a few wheels, in some examples such as when the vehicle 1 is travelling straight it may be possible that, only wheels of one axle is needed to have torque adapted.

In other words, the first wheel 11 may have a reduction in torque, and the rest of the operational wheels in the plurality of wheels 10 may use any suitable torque vectoring technique to adjust the torque of the plurality of wheels 10 such that the vehicle 1 can be safely operated along the trajectory t.

In some examples, adapting respective torques applied to the plurality of wheels 10 comprises determining and applying respective torque for the plurality of wheels 10, typically for each of the plurality of wheels 10.

In some of these examples, the torques for the plurality of wheels 10 are determined such that a resulting vehicle motion of the vehicle 1 maintains the trajectory t of the vehicle 1 within an error margin of the trajectory t. The vehicle 1 may thereby operate safely along the trajectory t.

Additionally or alternatively, in some of these examples, the torques for the plurality of wheels 10 are determined such that a resulting vehicle motion of the vehicle 1 meets one or more speed criteria. In this way, it may be ensured that the vehicle 1 does not speed up or slow down too much which may be a hazard in some situations.

In other words, the torques for the plurality of wheels 10 may be torque vectored such that the vehicle 1 follows the trajectory t, but with a decreased vehicle speed.

In some examples, when the trajectory t is indicative of that the vehicle 1 is turning by more than a turning threshold, adapting the respective torques applied to the plurality of wheels 10 may comprise reducing torque on the first wheel 11, and adapting the torques of the remaining plurality of wheels 10 based on a predefined torque vectoring model, such that the adapted torque of the plurality of wheels 10 maintains the turning trajectory t of the vehicle 1 within an error margin of the trajectory t.

The predefined torque vectoring model may be any suitable vectoring model which can determine how different torques to the plurality of wheels 10 affects the trajectory of the vehicle 1.

In some examples, when the first wheel 11 is attached to a steered axle of the vehicle 1, and wherein the steered axle further is attached to a second wheel 12 of the plurality of wheels 10, adapting the respective torques applied to the plurality of wheels 10 may comprise reducing torque applied to the first wheel 11 and adapting a torque applied to the second wheel 12 such that a motion of the second wheel 12 is adapted to correspond to a motion of the first wheel 11. In other words, the motion of the second wheel 12 may be adapted such that an effect of a motion of the first wheel 11 on the trajectory t is minimized.

In some examples, in response to also detecting a tire pressure hazard in the third wheel 13, adapting the respective torques applied to the plurality of wheels 10 comprises, in addition to reducing or removing torque applied to the first wheel 11, reducing or removing torque applied to the third wheel 13. Furthermore, in these examples, adapting the respective torques comprises adapting torque for the remaining plurality of wheels 10 of the vehicle 1. In these examples, the torque for the remaining plurality of wheels 10 is adapted based on the trajectory t and adapted by accounting for the reduced or removed torque of the first wheel 11 and accounting for the reduced or removed torque of the third wheel 13.

In other words, the torque of the plurality of wheels 10 may be adapted to attempt to maintain the trajectory t independent on number of wheels with tire pressure hazards.

In some examples, when the trajectory t is indicative of that the vehicle 1 is not turning by more than a turning threshold, adapting the respective torques applied to the plurality of wheels 10 comprises reducing or removing torque to wheels belonging to the same axle as the first wheel 11, in some examples only reducing or removing torque to wheels belonging to the same axle as the first wheel 11.

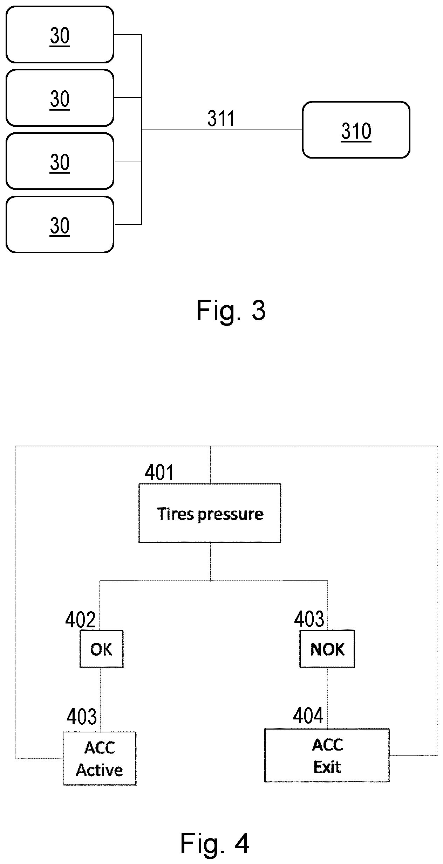

**FIG. 3** is an exemplary block diagram of the one or more tire pressure sensors 30. The one or more tire pressure sensors 30 may communicate using a communication bus of the vehicle 1, to a torque vectoring unit, e.g., as part of the computer system 1000 and/or the processing circuitry 1002. The torque vectoring unit may be used to perform any of the above-mentioned actions herein.

**FIG. 4** is a flow chart of ACC management according to an example.

Tire pressures may be **measured 401,** e.g. by a pressure sensor. If the tire pressures are within a set interval they may be considered **OK 402,** and ACC may **remain active 403.** If the tire pressures indicate a tire hazard, e.g., as in action 201, the tire pressures may be considered **Not OK (NOK) 404,** and **ACC is exited 405.** ACC may again be activated when the tire pressures are considered OK.

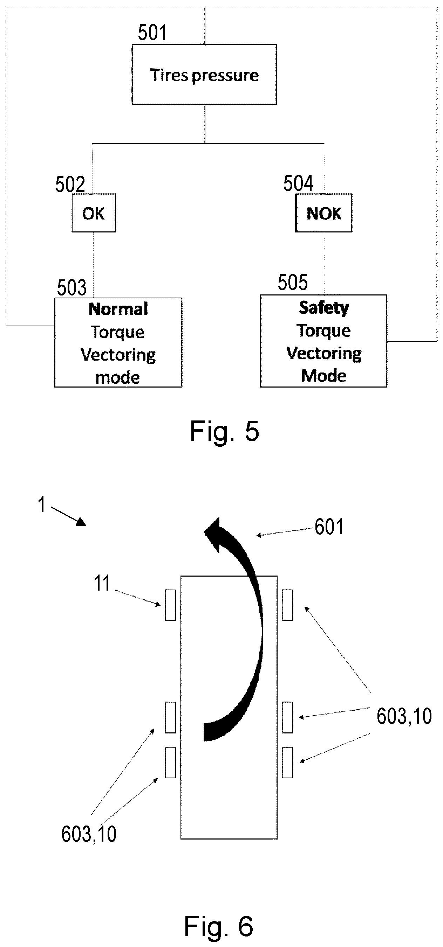

**FIG. 5** is a flow chart of Torque vectoring management according to an example.

Tire pressures may be **measured 501,** e.g. by a pressure sensor. If the tire pressures are within a set interval they may be considered **OK 502,** and normal torque vectoring mode may **remain active 503.** The normal torque vectoring mode may be any suitable distribution of torque, e.g., initial distribution of torque, between the plurality of wheels 10. If the tire pressures indicate a tire hazard, e.g., as in action 201, the tire pressures may be considered **Not OK (NOK) 504,** and a safety torque vectoring mode is **initiated 505.** The safety torque vectoring mode may relate to adapting torque of the plurality of wheels 10 e.g., as in action 204. Safety in this context refers to active torque vectoring for maintaining a trajectory even though there is a pressure hazard in a wheel of the vehicle.

The normal torque vectoring mode may again be activated when the tire pressures are considered OK. The normal torque vectoring mode may be an initial torque vectoring for the wheels.

**FIG. 6** illustrates an example scenario.

In the example scenario of FIG. 6, the vehicle 1 is subject to a tire hazard, e.g., a rapid pressure loss, in the first wheel 11. The tire hazard results in that the vehicle 1 is subject to a **force 601.** The **remaining wheels 603** out of the plurality of wheels 10 may be subject to a respective torque applied to compensate the force 601, e.g., by adapting torque as in action 204. A rapid pressure loss may be a certain pressure loss during a predetermined time.

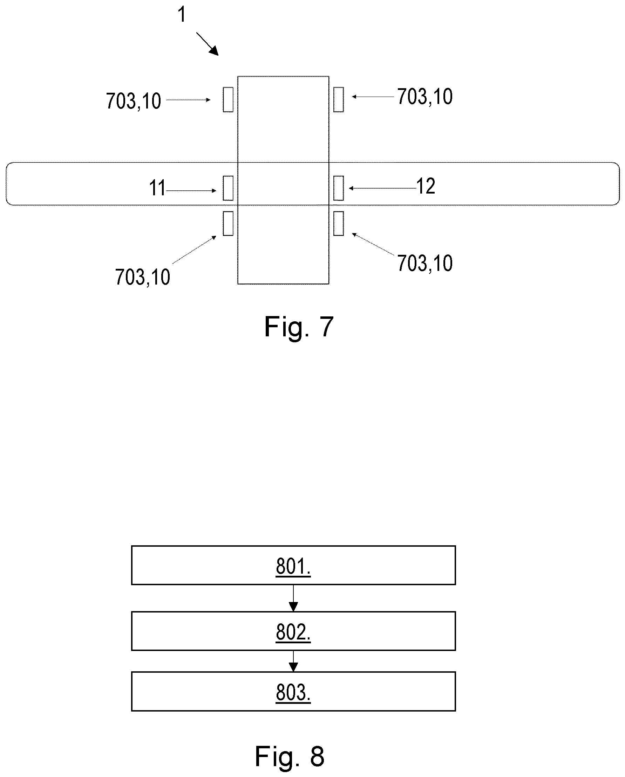

**FIG. 7** is another example scenario. In the example scenario of FIG. 7, a tire hazard is detected in the first wheel 11. As a response, e.g., as in action 204, torque reduction and/or removal is performed for the first wheel 11 and in the second wheel 12. Since the first wheel 11 and the second wheel 12 is of a non-steered axle, if the second wheel 12 can sufficiently adapt to the motion of the first wheel, **remaining wheels 703** out of the plurality of wheels 10 may maintain their respective torque and the trajectory t may still be maintained.

### Further variations and scenarios

Examples herein relate to handling the vehicle 1 when there is a tire pressure hazard such as a rapid pressure loss of a tire or a tire explosion in the plurality of wheels.

Two examples scenarios may be considered in some examples herein.

**Example scenario 1:** Tire failure on a steering axle, e.g., front axle, of the vehicle 1.

In this scenario, a goal may be to remove all the torque on both left and right wheels of the steering axle on which there is a tire hazard, e.g., as in action 204. Furthermore, it may be possible to maintain a torque on the other wheel of the other axles to maintain the trajectory t and movement of the vehicle 1, e.g., as in action 204.

**Example Scenario 2:** Tire failure on a driving axle, e.g., a non-steered axle.

In this scenario, a goal may be to isolate the tire failure in the first wheel 11 by removing all the torque on the first wheel 11. To keep a safe trajectory, a further goal is to apply a specific torque on the other wheel to compensate the lost torque on the first wheel 11 so as to keep the current vehicle trajectory t, e.g., as in action 204.

**FIG. 8** is a flow chart of a method according to an example.

A computer-implemented method for handling a vehicle motion of the vehicle 1 is provided. The vehicle 1 comprises the plurality of wheels 10. The plurality of wheels 10 comprises the motion support devices 20 for controlling a respective motion of the respective wheel.

### Action 801

The method comprises, by a processing circuitry 1002 of the computer system 1000, detecting a tire pressure hazard, of the first wheel 11 of the plurality of wheels 10. The tire pressure hazard may be detected by obtaining tires pressure information from a pressure sensor arranged to monitor pressure in the first wheel 11.

### Action 802

The method comprises, by the processing circuitry 1002, obtaining an indication of the trajectory t of the vehicle 1.

The indication of the trajectory t may be obtained in any suitable manner, e.g., based on any suitable trajectory determination model, e.g., using sensor data of the vehicle 1 and/or map data of the road travelled by the vehicle 1.

The indication may be obtained from receiving and processing sensor data of sensors measuring the road ahead of the vehicle, e.g., by one or more cameras, and/or from receiving and processing sensor data of a vehicle motion, e.g., wheel speed sensors, and/or from deriving the trajectory t predefined map data of a road travelled by the vehicle 1.

### Action 803

The method comprises, by the processing circuitry 1002 and by using the motion support devices 20, adapting respective torques applied to the plurality of wheels 10 by:
- reducing or removing torque applied to the first wheel 11 and,
- adapting torque for the remaining plurality of wheels 10 of the vehicle 1, the torque for the remaining plurality of wheels 10 being adapted based on the trajectory t and adapted by accounting for the reduced or removed torque of the first wheel 11.

The respective torques may be adapted by sending instructions from the processing circuitry 1102 to the respective motion support devices 20 which performs the adaptation.

Action 801-803 above may be combined with any of the actions 201-204 above in any suitable manner.

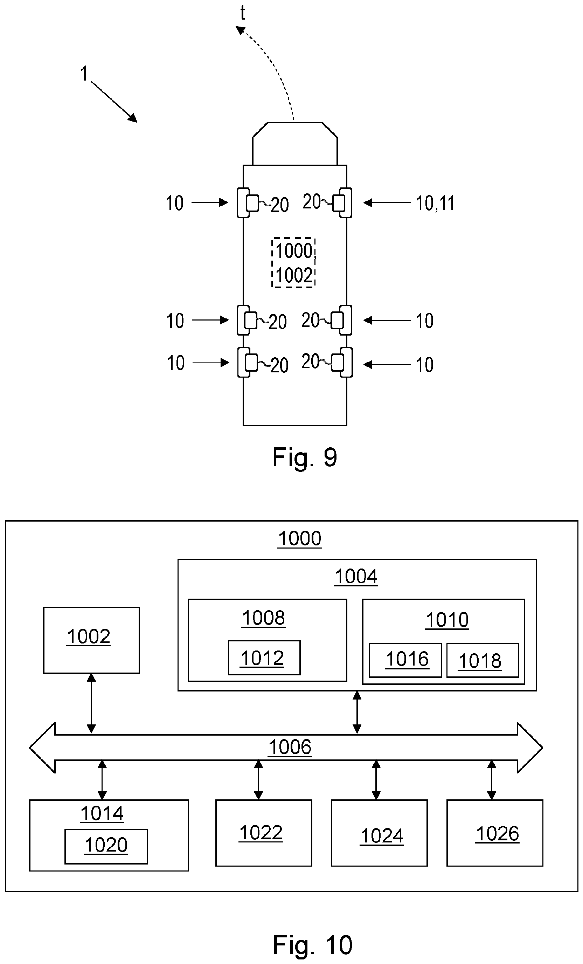

**FIG. 9** is another view of **FIG. 1****,** according to an example.

The computer system 1000 comprising the processing circuitry 1002 is configured to handle a motion of the vehicle 1 comprising the plurality of wheels 10 is provided. The plurality of wheels 10 comprises the motion support devices 20 for controlling a respective motion of the respective wheel.

The processing circuitry 1002 is configured to detect a tire pressure hazard, of the first wheel 11 of the plurality of wheels 10.

The processing circuitry 1002 is configured to obtain an indication of the trajectory t of the vehicle 1.

The processing circuitry 1002 is configured to adapt respective torques applied to the plurality of wheels 10 by using the motion support devices 20 to:
- reduce or remove torque applied to the first wheel 11 and,
- adapt torque for the remaining plurality of wheels 10 of the vehicle 1, the torque for the remaining plurality of wheels 10 being adapted based on the trajectory t and adapted by accounting for the reduced or removed torque of the first wheel 11.

**FIG. 10** is a schematic diagram of a computer system **1000** for implementing examples disclosed herein. The computer system **1000** is adapted to execute instructions from a computer-readable medium to perform these and/or any of the functions or processing described herein. The computer system **1000** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **1000** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **1000** may comprise at least one computing device or electronic device capable of including firmware, hardware, and/or executing software instructions to implement the functionality described herein. The computer system **1000** may include processing circuitry **1002** (e.g., processing circuitry including one or more processor devices or control units), a memory **1004,** and a system bus **1006.** The computer system **1000** may include at least one computing device having the processing circuitry **1002.** The system bus **1006** provides an interface for system components including, but not limited to, the memory **1004** and the processing circuitry **1002.** The processing circuitry **1002** may include any number of hardware components for conducting data or signal processing or for executing computer code stored in memory **1004.** The processing circuitry **1002** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **1002** may further include computer executable code that controls operation of the programmable device.

The system bus **1006** may be any of several types of bus structures that may further interconnect to a memory bus (with or without a memory controller), a peripheral bus, and/or a local bus using any of a variety of bus architectures. The memory **1004** may be one or more devices for storing data and/or computer code for completing or facilitating methods described herein. The memory **1004** may include database components, object code components, script components, or other types of information structure for supporting the various activities herein. Any distributed or local memory device may be utilized with the systems and methods of this description. The memory **1004** may be communicably connected to the processing circuitry **1002** (e.g., via a circuit or any other wired, wireless, or network connection) and may include computer code for executing one or more processes described herein. The memory **1004** may include non-volatile memory **1008** (e.g., read-only memory (ROM), erasable programmable read-only memory (EPROM), electrically erasable programmable read-only memory (EEPROM), etc.), and volatile memory **1010** (e.g., random-access memory (RAM)), or any other medium which can be used to carry or store desired program code in the form of machine-executable instructions or data structures and which can be accessed by a computer or other machine with processing circuitry **1002.** A basic input/output system (BIOS) **1012** may be stored in the non-volatile memory **1008** and can include the basic routines that help to transfer information between elements within the computer system **1000.**

The computer system **1000** may further include or be coupled to a non-transitory computer-readable storage medium such as the storage device **1014,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **1014** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **1014** and/or in the volatile memory **1010,** which may include an operating system **1016** and/or one or more program modules **1018.** All or a portion of the examples disclosed herein may be implemented as a computer program **1020** stored on a transitory or non-transitory computer-usable or computer-readable storage medium (e.g., single medium or multiple media), such as the storage device **1014,** which includes complex programming instructions (e.g., complex computer-readable program code) to cause the processing circuitry **1002** to carry out actions described herein. Thus, the computer-readable program code of the computer program **1020** can comprise software instructions for implementing the functionality of the examples described herein when executed by the processing circuitry **1002.** In some examples, the storage device **1014** may be a computer program product (e.g., readable storage medium) storing the computer program **1020** thereon, where at least a portion of a computer program **1020** may be loadable (e.g., into a processor) for implementing the functionality of the examples described herein when executed by the processing circuitry **1002.** The processing circuitry **1002** may serve as a controller or control system for the computer system **1000** that is to implement the functionality described herein.

The computer system **1000** may include an input device interface **1022** configured to receive input and selections to be communicated to the computer system **1000** when executing instructions, such as from a keyboard, mouse, touch-sensitive surface, etc. Such input devices may be connected to the processing circuitry **1002** through the input device interface **1022** coupled to the system bus **1006** but can be connected through other interfaces, such as a parallel port, an Institute of Electrical and Electronic Engineers (IEEE) 1394 serial port, a Universal Serial Bus (USB) port, an IR interface, and the like. The computer system **1000** may include an output device interface **1024** configured to forward output, such as to a display, a video display unit (e.g., a liquid crystal display (LCD) or a cathode ray tube (CRT)). The computer system **1000** may include a communications interface **1026** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The following Examples 1-20 may exemplify further aspects of the disclosure and may be combined with the above examples in any suitable manner.
Example 1. A computer system 1000 comprising processing circuitry 1002 configured to handle a motion of a vehicle 1 comprising plurality of wheels 10, the plurality of wheels 10 comprising motion support devices 20 for controlling a respective motion of the respective wheel, the processing circuitry 1002 being configured to:
   - detect a tire pressure hazard, of a first wheel 11 of the plurality of wheels 10, and
   - obtain an indication of a trajectory t of the vehicle 1,
   - adapt respective torques applied to the plurality of wheels 10 by using the motion support devices 20 to:
      ∘ reduce or remove torque applied to the first wheel 11 and,
      ∘ adapt torque for the remaining plurality of wheels 10 of the vehicle 1, the torque for the remaining plurality of wheels 10 being adapted based on the trajectory t and adapted by accounting for the reduced or removed torque of the first wheel 11.
Example 2. The computer system 1000 of Example 1, wherein the processing circuitry 1002 is further configured to adapt the respective torques applied to the plurality of wheels 10 by:
   - determining and applying respective torque for each of the plurality of wheels 10, wherein the torques for the plurality of wheels 10 are determined such that a resulting vehicle motion of the vehicle 1 maintains the trajectory t of the vehicle 1 within an error margin of the trajectory t.
Example 3. The computer system 1000 of Example 1 or 2, wherein the processing circuitry 1002 is further configured to adapt the respective torques applied to the plurality of wheels 10 by:
   - determining and applying respective torque for the plurality of wheels 10, wherein the torques for the plurality of wheels 10 are determined such that a resulting vehicle motion of the vehicle 1 meets one or more speed criteria 1.
Example 4. The computer system 1000 of any of Examples 1-3, wherein when the trajectory t is indicative of that the vehicle 1 is not turning by more than a turning threshold, the processing circuitry 1002 is configured to adapt the respective torques applied to the plurality of wheels 10 by reducing or removing torque to wheels belonging to the same axle as the first wheel 11.
Example 5. The computer system 1000 of any of Examples 1-4, wherein when the trajectory t is indicative of that the vehicle 1 is turning by more than a turning threshold, the processing circuitry 1002 is configured to adapt the respective torques applied to the plurality of wheels 10 by reducing torque on the first wheel 11, and to adapt the torque of the remaining plurality of wheels 10 based on a predefined torque vectoring model, such that the adapted torque of the plurality of wheels 10 maintains the turning trajectory t of the vehicle 1 within an error margin of the turning trajectory t.
Example 6. The computer system 1000 of any of Examples 1-5, wherein when the first wheel 11 is attached to a steered axle of the vehicle 1, and wherein the steered axle further is attached to a second wheel 12 of the plurality of wheels 10, and wherein the processing circuitry 1002 is configured to adapt the respective torques applied to the plurality of wheels 10 by:
   - reducing torque applied to the first wheel 11 and
   - adapting a torque applied to the second wheel 12 such that a motion of the second wheel 12 is adapted to correspond to a motion of the first wheel 11.
Example 7. The computer system 1000 of any of Examples 1-6, wherein the vehicle 1 is configured to travel using Adaptive Cruise Control, ACC, or Cruise Control, CC, and wherein the processing circuitry 1002 is configured to:
   - in response to detecting the tire pressure hazard of the first wheel 11, reconfigure the vehicle 1 to a manual control mode or to a predefined tire pressure hazard control mode arranged for an automatic controlled stop of the vehicle 1.
Example 8. The computer system 1000 of any of Examples 1-7, wherein the processing circuitry 1002 is configured to detect the tire pressure hazard in the first wheel 11 by detecting a pressure drop, flat tire or tire explosion of the first wheel 11.
Example 9. The computer system 1000 of any of Examples 1-8, wherein the processing circuitry 1002 is further configured to:
   - in addition to detecting a tire pressure hazard of the first wheel 11, detect a tire pressure hazard of a third wheel 13 of the plurality of wheels 10, and
   - adapt respective torques applied to the plurality of wheels 10 by:
      ∘ in addition to reducing or removing torque applied to the first wheel 11, reducing or removing torque applied to the third wheel 13 and,
      ∘ adapting torque for the remaining plurality of wheels 10 of the vehicle 1, wherein the torque for the remaining plurality of wheels 10 is adapted based on the trajectory t and adapted by accounting for the reduced or removed torque of the first wheel 11 and accounting for the reduced or removed torque of the third wheel 13.
Example 10. A vehicle 1 comprising plurality of wheels 10 and wherein the vehicle 1 comprises and/or is controlled by the computer system 1000 according to any of Examples 1-9.
Example 11. The vehicle 1 of Example 10, wherein the vehicle 1 is a vehicle combination comprising a tractor and a trailer, and wherein the plurality of wheels 10 comprises plurality of wheels 10 of the tractor and plurality of wheels 10 of the trailer.
Example 12. A computer-implemented method for handling a motion of a vehicle 1 comprising plurality of wheels 10, the plurality of wheels 10 comprising motion support devices 20 for controlling a respective motion of the respective wheel, the method comprising:
   - by a processing circuitry 1002 of a computer system 1000, detecting 201, 801 a tire pressure hazard, in a first wheel 11 of the plurality of wheels 10, and
   - by the processing circuitry 1002, obtaining 203, 802 an indication of a trajectory t of the vehicle 1,
   - by the processing circuitry 1002 and by using the motion support devices 20, adapting 204, 803 respective torques applied to the plurality of wheels 10 by:
      ∘ reducing or removing torque applied to the first wheel 11 and,
      ∘ adapting torque for the remaining plurality of wheels 10 of the vehicle 1, the torque for the remaining plurality of wheels 10 being adapted based on the trajectory t and adapted by accounting for the reduced or removed torque of the first wheel 11.
Example 13. The method of Example 12, wherein adapting 204 respective torques applied to the plurality of wheels 10 comprises:
   - determining and applying respective torque for each of the plurality of wheels 10, wherein the torques for the plurality of wheels 10 are determined such that a resulting vehicle motion of the vehicle 1 maintains the trajectory t of the vehicle 1 within an error margin of the trajectory t.
Example 14. The method of Example 12 or 13, wherein adapting 204 respective torques applied to the plurality of wheels 10 comprises:
   - determining and applying respective torque for the plurality of wheels 10, wherein the torques for the plurality of wheels 10 are determined such that a resulting vehicle motion of the vehicle 1 meets one or more speed criteria.
Example 15. The method of any of Examples 12-14, wherein when the trajectory t is indicative of that the vehicle 1 is turning by more than a turning threshold, adapting 204 respective torques applied to the plurality of wheels 10 comprises reducing torque on the first wheel 11, and adapting the torque of the remaining plurality of wheels 10 based on a predefined torque vectoring model, such that the adapted torque of the plurality of wheels 10 maintains the turning trajectory t of the vehicle 1 within an error margin of the trajectory t.
Example 16. The method of any of Examples 12-15, wherein when the first wheel 11 is attached to a steered axle of the vehicle 1, and wherein the steered axle further is attached to a second wheel 12 of the plurality of wheels 10, adapting 204 respective torques applied to the plurality of wheels 10 comprises:
   - reducing torque applied to the first wheel 11 and
   - adapting a torque applied to the second wheel 12 such that a motion of the second wheel 12 is adapted to correspond to a motion of the first wheel 11.
Example 17. The method of any of Examples 12-16, wherein the vehicle 1 is configured to travel using Adaptive Cruise Control, ACC, or Cruise Control, CC, and wherein the method further comprises:
   - in response to detecting 201 the tire pressure hazard of the first wheel 11, reconfiguring 202 the vehicle 1 to a manual control mode or to a predefined tire pressure hazard control mode arranged for an automatic controlled stop of the vehicle 1.
Example 18. The method of any of Examples 12-17, wherein the detecting 201 the tire pressure hazard of the first wheel 11, further comprises detecting a tire pressure hazard of a third wheel 13 of the plurality of wheels 10, and wherein adapting 204 respective torques applied to the plurality of wheels 10 by:
   ∘ in addition to reducing or removing torque applied to the first wheel 11, reducing or removing torque applied to the third wheel 13 and,
   ∘ adapting torque for the remaining plurality of wheels 10 of the vehicle 1, the torque for the remaining plurality of wheels 10 being adapted based on the trajectory t and adapted by accounting for the reduced or removed torque of the first wheel 11 and accounting for the reduced or removed torque of the third wheel 13.
Example 19. A computer program product comprising program code for performing, when executed by the processing circuitry 1002, the method of any of Examples 12-18.
Example 20. A non-transitory computer-readable storage medium comprising instructions, which when executed by the processing circuitry 1002, cause the processing circuitry 1002 to perform the method of any of Examples 12-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (1000) comprising processing circuitry (1002) configured to handle a motion of a vehicle (1) comprising plurality of wheels (10), the plurality of wheels (10) comprising motion support devices (20) for controlling a respective motion of the respective wheel, the processing circuitry (1002) being configured to:
- detect a tire pressure hazard, of a first wheel (11) of the plurality of wheels (10), and
- obtain an indication of a trajectory (t) of the vehicle (1),
- adapt respective torques applied to the plurality of wheels (10) by using the motion support devices (20) to:
∘ reduce or remove torque applied to the first wheel (11) and,
∘ adapt torque for the remaining plurality of wheels (10) of the vehicle (1), the torque for the remaining plurality of wheels (10) being adapted based on the trajectory (t) and adapted by accounting for the reduced or removed torque of the first wheel (11).

2. The computer system (1000) of claim 1, wherein the processing circuitry (1002) is further configured to adapt the respective torques applied to the plurality of wheels (10) by:
- determining and applying respective torque for each of the plurality of wheels (10), wherein the torques for the plurality of wheels (10) are determined such that a resulting vehicle motion of the vehicle (1) maintains the trajectory (t) of the vehicle (1) within an error margin of the trajectory (t).

3. The computer system (1000) of claim 1 or 2, wherein the processing circuitry (1002) is further configured to adapt the respective torques applied to the plurality of wheels (10) by:
- determining and applying respective torque for the plurality of wheels (10), wherein the torques for the plurality of wheels (10) are determined such that a resulting vehicle motion of the vehicle (1) meets one or more speed criteria (1).

4. The computer system (1000) of any of claims 1-3, wherein when the trajectory (t) is indicative of that the vehicle (1) is not turning by more than a turning threshold, the processing circuitry (1002) is configured to adapt the respective torques applied to the plurality of wheels (10) by reducing or removing torque to wheels belonging to the same axle as the first wheel (11).

5. The computer system (1000) of any of claims 1-4, wherein when the trajectory (t) is indicative of that the vehicle (1) is turning by more than a turning threshold, the processing circuitry (1002) is configured to adapt the respective torques applied to the plurality of wheels (10) by reducing torque on the first wheel (11), and to adapt the torque of the remaining plurality of wheels (10) based on a predefined torque vectoring model, such that the adapted torque of the plurality of wheels (10) maintains the turning trajectory (t) of the vehicle (1) within an error margin of the turning trajectory (t).

6. The computer system (1000) of any of claims 1-5, wherein when the first wheel (11) is attached to a steered axle of the vehicle (1), and wherein the steered axle further is attached to a second wheel (12) of the plurality of wheels (10), and wherein the processing circuitry (1002) is configured to adapt the respective torques applied to the plurality of wheels (10) by:
- reducing torque applied to the first wheel (11) and
- adapting a torque applied to the second wheel (12) such that a motion of the second wheel (12) is adapted to correspond to a motion of the first wheel (11).

7. The computer system (1000) of any of claims 1-6, wherein the vehicle (1) is configured to travel using Adaptive Cruise Control, ACC, or Cruise Control, CC, and wherein the processing circuitry (1002) is configured to:
- in response to detecting the tire pressure hazard of the first wheel (11), reconfigure the vehicle (1) to a manual control mode or to a predefined tire pressure hazard control mode arranged for an automatic controlled stop of the vehicle (1).

8. The computer system (1000) of any of claims 1-7, wherein the processing circuitry (1002) is configured to detect the tire pressure hazard in the first wheel (11) by detecting a pressure drop, flat tire or tire explosion of the first wheel (11).

9. The computer system (1000) of any of claims 1-8, wherein the processing circuitry (1002) is further configured to:
- in addition to detecting a tire pressure hazard of the first wheel (11), detect a tire pressure hazard of a third wheel (13) of the plurality of wheels (10), and
- adapt respective torques applied to the plurality of wheels (10) by:
∘ in addition to reducing or removing torque applied to the first wheel (11), reducing or removing torque applied to the third wheel (13) and,
∘ adapting torque for the remaining plurality of wheels (10) of the vehicle (1), wherein the torque for the remaining plurality of wheels (10) is adapted based on the trajectory (t) and adapted by accounting for the reduced or removed torque of the first wheel (11) and accounting for the reduced or removed torque of the third wheel (13).

10. A vehicle (1) comprising plurality of wheels (10) and wherein the vehicle (1) comprises and/or is controlled by the computer system (1000) according to any of claims 1-9.

11. The vehicle (1) of claim 10, wherein the vehicle (1) is a vehicle combination comprising a tractor and a trailer, and wherein the plurality of wheels (10) comprises plurality of wheels (10) of the tractor and plurality of wheels (10) of the trailer.

12. A computer-implemented method for handling a motion of a vehicle (1) comprising plurality of wheels (10), the plurality of wheels (10) comprising motion support devices (20) for controlling a respective motion of the respective wheel, the method comprising:
- by a processing circuitry (1002) of a computer system (1000), detecting (201, 801) a tire pressure hazard, in a first wheel (11) of the plurality of wheels (10), and
- by the processing circuitry (1002), obtaining (203, 802) an indication of a trajectory (t) of the vehicle (1),
- by the processing circuitry (1002) and by using the motion support devices (20), adapting (204, 803) respective torques applied to the plurality of wheels (10) by:
∘ reducing or removing torque applied to the first wheel (11) and,
∘ adapting torque for the remaining plurality of wheels (10) of the vehicle (1), the torque for the remaining plurality of wheels (10) being adapted based on the trajectory (t) and adapted by accounting for the reduced or removed torque of the first wheel (11).

13. The method of claim 12, wherein adapting (204) respective torques applied to the plurality of wheels (10) comprises:
- determining and applying respective torque for each of the plurality of wheels (10), wherein the torques for the plurality of wheels (10) are determined such that a resulting vehicle motion of the vehicle (1) maintains the trajectory (t) of the vehicle (1) within an error margin of the trajectory (t); and/or
wherein adapting (204) respective torques applied to the plurality of wheels (10) comprises:
- determining and applying respective torque for the plurality of wheels (10), wherein the torques for the plurality of wheels (10) are determined such that a resulting vehicle motion of the vehicle (1) meets one or more speed criteria.

14. A computer program product comprising program code for performing, when executed by the processing circuitry (1002), the method of any of claims 12-13.

15. A non-transitory computer-readable storage medium comprising instructions, which when executed by the processing circuitry (1002), cause the processing circuitry (1002) to perform the method of any of claims 12-13.
